(19) Europäisches Patentamt
European Patent Office
Office européen des brevets

(11) **EP 3 183 308 B1**

(12) **EUROPEAN PATENT SPECIFICATION**

(45) Date of publication and mention
of the grant of the patent:
**13.02.2019 Bulletin 2019/07**

(21) Application number: **15787043.7**

(22) Date of filing: **19.08.2015**

(51) Int Cl.:
**C09D 123/00** $^{(2006.01)}$

(86) International application number:
**PCT/NL2015/050582**

(87) International publication number:
**WO 2016/028148 (25.02.2016 Gazette 2016/08)**

(54) **COMPOSITION FOR THE PROTECTION OF AN ARTICLE AGAINST CORROSION**

ZUSAMMENSETZUNG FÜR DEN KORROSIONSSCHUTZ EINES ARTIKELS

COMPOSITION POUR PROTECTION ANTI-CORROSIF D'UNE ARTICLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 EP 14181914**

(43) Date of publication of application:
**28.06.2017 Bulletin 2017/26**

(73) Proprietor: **Frans Nooren Afdichtingssystemen B.V.**
**9503 JB Stadskanaal (NL)**

(72) Inventors:
• **DODDEMA, Jan Frederik**
**NL-9503 JB Stadskanaal (NL)**
• **ABELING, Jacobus Johannes**
**NL-9503 JB Stadskanaal (NL)**

(74) Representative: **Nederlandsch Octrooibureau**
**P.O. Box 29720**
**2502 LS The Hague (NL)**

(56) References cited:
WO-A1-03/060035     WO-A1-2013/095144
WO-A2-2008/056979     US-B1- 6 187 849

## Description

### Field of the invention

The present invention relates to the use of compositions comprising an amorphous polymer and a wax for protecting articles against corrosion, in particular articles comprising metals, metal alloys, metal compositions and/or concrete. These compositions are in particular used for sealing and insulating articles which are in contact with salts, moisture, water and other corrosive substances. The shaped article may be selected from the group consisting of oil lines, oil pipes, gas lines, gas pipes, man hole covers, tanks, welding joints, flanges, crane hooks, thermit weldings and T-joints, The articles may be located subterranean or superterranean. The compositions may be applied to the outer surface or the inner surface of the article where appropriate.

### Background of the invention

Compositions based on amorphous polymers which are used for protecting articles against corrosion are known in the art.

US 5.898.044 discloses a composition comprising an apolar, non-setting fluid polymer having a glass transition temperature $T_g$ lower than -20°C and a filler. The apolar, non-setting fluid polymer may be selected from a wide range of materials and is preferably a polyisobutene or a polysiloxane. The composition may comprise further additives such as antioxidants, UV stabilizers and products obtained from crude oil such as bituminous products and paraffin-like products, *e.g.* petroleum gel or wax. US 7.608.343, US 2010/0051199 and WO2008/056979A2 disclose compositions similar to that of US 5.898.044. The compositions according to US 5.898.044, US 7.608.343 and US 2010/0051199 have the disadvantage that they are tacky at ambient temperature and have therefore a limited handleability. Furthermore, they are viscous materials and therefore have a limited processability.

Compositions based on polyisobutene and wax are also known in the art and have been used for various purposes, *e.g.* for coating paper, as adhesives, as a base for gum, and for corrosion protection.

GB 621.923 discloses a composition comprising as a major component a paraffin wax (typically more than 95 wt.%) and as minor components polyethene and polyisobutene. The composition has a lower tendency to "blocking" compared to pure paraffin wax, *i.e.* that it has a reduced tackiness. The composition is used for coating paper which is used in automatic wrapping machinery.

US 2.876.204 discloses a composition consisting of paraffin wax as a major component and 0.1 to 2 wt.% polyethene and 0.1 to 3 wt.% polyisobutene. The composition is used for coating paper.

US 3.084.128 discloses a heat-seal coating composition comprising 70 to 90 wt.% microcrystalline wax having a melting point of about 170° - 195°C, 3 to 9 wt.% polyisobutene having a molecular weight of higher than about 30.000, 3 to 20 wt.% polyethylene having a molecular weight of higher than about 6.000 and 2 to 8 wt.% of a resin.

GB 1044756 discloses a heat sealable adhesive composition comprising 60 - 99 wt.% petroleum wax and 1 - 40 wt.% of a polymeric additive, wherein the polymeric additive may be a polyisobutene having a molecular weight of 1000 to 250.000.

JP S 59187069 discloses an adhesive composition containing (a) 15 - 60 wt% of a high molecular weight polyisobutene and/or an ethylene ethyl acrylate copolymer, (b) 20 - 55 wt% of a low molecular weight polyisobutene and/or a hydrocarbon tackifier, (c) 10 - 30 wt% microcrystalline wax and (d) 0 - 20 wt% paraffin wax and/or polyethylene wax, wherein the total amount of (a), (b), (c) and (d) is 100 wt.%.

US 5.169.890 discloses a hot melt adhesive comprising about 12 to about 20 wt.% of a block polymer, about 18 to about 25 wt.% of a polyisobutene, about 2 to about 6 wt.% of a partially cross-linked polyisobutene, about 30 to about 40 wt.% tackifying resin, about 1 to about 3 wt.% antioxidant, about 3 to about 6 wt.% phenolic resin, about 8 to about 15 wt.% petroleum derived wax and about 0.2 to about 0.5 of a surface active agent.

US 6.136.119 discloses an adhesive essentially consisting of a mixture of about 40% to 75% by weight of polyisobutene having a Flory molecular weight of from about 40.000 to 70.000, about 25% to 60% by weight of a wax having a melting point of at least 165°F (about 74°C) and a needle penetration value of from about 1 to 15 and 0% to 30% by weight of an adhesion promoter resin having a softening point above 150°F (about 66°C).

WO 2008/046535 discloses an adhesive composition comprising 15 - 75 wt.% polyisobutene and at least 25 wt.% of a wax, based on the total weight of the adhesive composition. The adhesive composition may comprise up to 25 wt.% of a filler and up to 5 wt.% of another additive, *e.g.* an antioxidant.

CN 102816535 discloses a butyl hot melt adhesive tape wherein the adhesive comprises polyisobutene, a polyethylene wax and butyl rubber.

CN 102367331 discloses a metallised-film capacitor sealing agent consisting of 40 to 60 parts by weight of petroleum wax, 10 to 15 parts by weight of polyisobutene, 20 to 30 parts by weight of vaseline, 10 to 15 parts by weight of mica powder, 10 to 15 parts by weight of vermiculite powder, 10 to 15 parts by weight of sulfur, 3 to 5 parts by weight of straw ash, and 10 to 15 parts by weight of attapulgite.

CN 102382474 discloses a potting wax for a metallised film capacitor, said potting wax comprising 40 to 60 parts by weight of petroleum wax, 10 to 15 parts by weight of polyisobutene, 20 to 30 parts by weight of vaseline, 10 to 15 parts by weight of sulphur, 10 to 15 parts by weight of mica powder and 10 to 15 parts by weight of attapulgite.

US 2005/0238759 discloses a gum base composition comprising 10 - 25 wt % of a vinylacetate resin, 10 - 25 wt % of an ester gum, 18 - 25 wt % of calcium carbonate, 6 - 14 wt % of petroleum wax, 16 - 24 wt % of polyisobutene, 1 - 5 wt % of a plasticizer, 0.5 - 4 wt % of an emulsifier, 3 - 10 wt % of polybutene, and 0.1-5 wt % of gelatin.

GB 667.042 discloses a corrosion inhibiting composition comprising a major proportion of a solvent (typically more than 70 wt.%) and minor proportions of a wax and a polyisobutene. It is preferred that the proportions of the wax and the polyisobutene in the composition is 2 - 10 and 0.01 - 0.05 parts by weight, respectively. The corrosion inhibiting composition is used to inhibit corrosion of certain parts of internal combusting engines, *e.g.* cylinder walls, pistons and cylinder heads wherein, after application of the composition, the solvent evaporates leaving a film on the parts to be protected.

CN 102977717 discloses a metal antirust agent which is prepared from 2 - 5 parts by weight of urea, 5 - 8 parts by weight of liquefied paraffin, 3 - 5 parts by weight of tri(2-ethylhexyl)acetocitrate, 4 - 6 parts by weight of acrylic acid, 0.2 - 0.3 parts by weight of zinc powder, 3 - 5 parts by weight of epoxy cottonseed oil, 2 - 3 parts by weight of xylene, 3 - 5 parts by weight of polyethylene wax, 0.2 - 0.3 parts by weight of potassium persulphate, 0.3 - 0.5 parts by weight of borax, 1 - 2 parts by weight of polyisobutene, 1 - 2 parts by weight of 2-aminoethylheptadecenylimidazoline, 1 - 2 parts by weight of benzotriazol, 0.5 - 1.5 parts by weight of N-phenyl-2-naphthylamine, 0.6 - 1.2 parts by weight of zinc dialkyldithiophosphate, 1.2 - 1.7 parts by weight of polyvinyl alcohol, 0.8 - 1.2 parts by weight of polyethylene glycol, 1.2 - 1.8 parts by weight of propylene glycol, 1.8 - 2.3 parts by weight of polyoxyethylene octylphenol ether and 100 - 110 parts by weight of water.

CN 102977719 disclose an aqueous metal antirust agent which is prepared from is prepared from 2 - 5 parts by weight of urea, 7 - 9 parts by weight of liquefied paraffin, 3 - 5 parts by weight of tri(2-ethylhexyl)acetocitrate, 3 - 5 parts by weight of acrylic acid, 0.2 - 0.3 parts by weight of zinc powder, 3 - 5 parts by weight of epoxy linseed oil, 2 - 3 parts by weight of xylene, 3 - 5 parts by weight of polyethylene wax, 0.2 - 0.3 parts by weight of potassium persulphate, 0.3 - 0.5 parts by weight of borax, 1 - 2 parts by weight of polyisobutene, 0.6 - 1.2 parts by weight of ammonium molybdate, 1.2 - 1.8 parts by weight of sodium diacetate, 1.2 - 1.9 parts by weight of 2-methylimidazoline, 0.9 - 1.6 parts by weight of diethanolamine, 1 - 2 parts by weight of polyoxyethylene nonyl phenyl ether, 0.8 - 1.6 parts by weight of polydimethylsiloxane and 95 - 105 parts by weight of water.

CN 102898846 discloses an anti-corrosion wax composition which comprises, by mass, 1 to 2% of a composite anti-rust agent, 3 to 4% of high-activity polyisobutene, 2 to 3% of Fischer-Tropsch wax, 2 to 4% of microcrystalline wax, 3% of asphalt, 2 to 3% of rice bran wax, 1 to 2% of gum rosin, 2 to 4% of $C_5$ petroleum resin, 3% of aluminium powder, 8% of kerosene and 2% of bentonite, with the balance being No. 200 white solvent naphtha.

In the compositions according to GB 667.042, CN 102977717, CN 102977719, and CN 102898846, the wax is present in a greater amount than the polyisobutene. These compositions also contain fairly large amounts of solvent(s).

US 2015/0112017 and WO2013/095144A1 disclose a composition comprising about 5 wt.% to about 30 wt.% of an amorphous polymer having a glass transition temperature of lower than about -20°C, about 15 wt.% to 60 wt.% of a filler and about 10 wt.% to about 80 wt.% of a solvent, the amounts being calculated on the total weight of the composition. The composition may further comprise one or more further components selected from the group of anti-oxidants, colorants and petroleum derived products such as waxes, petrolatum products and vaseline. The composition may be used as a coating, a primer or a paint.

WO 2003/060035 discloses a composition comprising a heat transfer medium and a corrosion resistant powder. The heat transfer medium is preferably selected from the group consisting of non-phase change materials and phase change materials. The non-phase change materials may be selected from a large group of polymers. The phase change materials may be selected from inorganic materials and organic materials, the organic materials being for example selected from paraffins, hydrocarbons and Fischer-Tropsch hard waxes. The corrosion resistant powder is preferably coated to enhance the corrosion resistance of the powder particles. The composition has an enhanced heat transfer capacity and thermal conductivity

US 6.187.849 discloses a temporary protective coating composition to prevent rusting and corrosion of metallic substrates, *e.g.* steel sheets, produced in steel mills. The composition comprises up to 20 wt.% wax, a base-neutralized, acid functional polymer and an amine containing an acrylic moiety.

## Summary of the invention

It has surprisingly been found that the addition of a wax reduces the tackiness and therefore improves the handleability of the compositions disclosed in US 5.898.044, US 7.608.343 and US 2010/0051199.

Accordingly, the present invention relates to the use of a composition for the protection of an article against corrosion, wherein the composition comprises a blend comprising about 70 to about 95 wt.% of an amorphous polymer and about 5 to about 30 wt.% of a hydrocarbon wax, based on the total weight of the blend, the composition containing at least 30 wt.% of said blend, based on the total weight of the composition, wherein:

(a) the amorphous polymer is a hydrocarbonaceous polymer and has a glass transition temperature $T_g$ of lower than about -20°C; and
(b) the hydrocarbon wax has a melting point of about 35° to about 130°C, wherein the hydrocarbon wax is a microcrystalline wax or a paraffin wax essentially containing only carbon and hydrogen.

The present invention also relates to a wrapping tape comprising (a) a backing layer and (b) a layer comprising the composition as described hereinbefore.

**Detailed description of the invention**

The verb "to comprise" and its conjugations as used in this description and in the claims are used in their non-limiting sense to mean that items following the word are included, but items not specifically mentioned are not excluded.
In addition, reference to an element by the indefinite article "a" or "an" does not exclude the possibility that more than one of the element is present, unless the context clearly requires that there is one and only one of the elements. The indefinite article "a" or "an" thus usually means "at least one".
The term "polymer" is meant to include homopolymers and copolymers.
The term "copolymer" is meant to include polymers comprising two or more different monomers.
The term "polyalkene" is herein used as a general term and it refers to polymers comprising at least an alkene monomer.
Commonly, a skilled person uses the term "polyisobutene" (or "polyisobutylene") in a general manner when referring to an amorphous polymer comprising isobutene monomers as a major component, and optionally further monomers, such as 1-butene, 2-butene and/or butadiene. Depending on the desired purity of the polyisobutenes, they may be prepared by various methods (*cf.* Ullmanns "Encyklopädie der technischen Chemie", 4th Ed., Vol. 19, pages 216 - 223, 1980**,** and Vol. 13, pages 621 - 623, **1977**). According to the general common use, the term "polyisobutene" includes polymers that comprise isobutene monomers in amounts such as at least about 50 wt.%, at least about 75 wt.%, at least about 90 wt.% or at least about 95 wt.%, and a monomer selected from the group consisting of $C_2$ - $C_{12}$ alkenes, $C_4$ - $C_{12}$ alkadienes, and mixtures thereof in amounts such as about 50 wt.% or less, about 25 wt.% or less, about 10 wt.% or less or about 5 wt.% or less, calculated on the total weight of the polyisobutene. As such, according to the general common use, the term "polyisobutene" encompasses polymers such as polybutenes and essentially non-cross-linked butyl rubbers as described below. In the present application, the term "polyisobutene" is used for an isobutene polymer as defined above.
In the present application, the term "polyisobutene homopolymer" is used in order to distinguish polyisobutenes having a very high isobutene monomer content from, for example, polyisobutenes having a lower isobutene monomer content as described above, and from polybutenes and butyl rubbers as described below. Thus, the term "polyisobutene homopolymer" as used herein refers to a polymer consisting essentially of isobutene monomers, *i.e.* a polymer comprising more than about 98 % to about 100 % isobutene, preferably about 99 % to about 100 %, more preferably about 99.5 % to about 100 %, even more preferably about 99.7 % to about 100 %, and in particular about 99.9 % to about 100 %, all by weight of isobutene, based on the total weight of the polymer. In the process for manufacturing polyisobutene homopolymers, very pure isobutene is used. The remainder of the monomers (*i.e.* up to about 2 wt.%) consist usually of $C_4$-alkenes (*cf.* Ullmanns "Encyklopädie der technischen Chemie", 4th Ed., Vol. 19, pages 216 - 223, 1980).
The term "polybutene" as used herein refers to a polymer prepared from a $C_4$-fraction obtained from the oil refining process (such as a $C_4$-fraction comprising 1-butene, 2-butene, isobutene and optionally butadiene).
The term "butyl rubber" as used herein refers to a polymer of about 95 wt.% to about 98 wt.% isobutene and about 2 wt.% to about 5 wt.% isoprene, based on the total weight of the polymer (Ullmanns "Encyklopädie der technischen Chemie", 4th Ed., Vol. 13, page 621, 1977, mentions in paragraph 1.8.1. that the amount of isoprene used in the cationic polymerisation process is 0.8 to 5 mol%).
The term "hydrocarbon wax" as used herein refers to a material that contains essentially only carbon and hydrogen. However, since the hydrocarbon wax may origin from crude oil, it may also contain low amounts of other elements, *e.g.* sulfur, oxygen and/or nitrogen. The hydrocarbon wax is solid at ambient temperature. The hydrocarbon wax may be a synthetic wax, *i.e.* it may be manufactured by the Fischer-Tropsch process or by a catalysed ethene oligomerisation process.

**The amorphous polymer**

According to the present invention, the amorphous polymer is a hydrocarbonaceous polymer. The hydrocarbonaceous polymer is optionally (partly) halogenated, preferably by bromine, chlorine or fluorine. It is preferred that the hydrocarbonaceous polymer is essentially non-vulcanised (non-cross-linked). The amorphous polymer may be a blend of two or more different amorphous polymers.

It is preferred that the amorphous polymer has a number average molecular weight $M_n$ of about 500 to about 1.000.000, more preferably within the range of about 1000 to about 800.000, even more preferably within the range of about 1.000 to about 600.000, even more preferably within the range of about 1.500 to about 300.000 and in particular within the range of about 2.000 to about 150.000.

The molecular weight distribution (or polydispersity index) $M_w/M_n$ of the amorphous polymer is preferably between 1 to about 10, more preferably 1 to about 5, even more preferably 1 to about 4 and most preferably about 1.5 to about 3.5.

Number average molecular weights and molecular weight distributions can for example be determined by gel permeation chromatography (GPC) or by viscosity measurements as is well known in the art.

According to the present invention, the amorphous polymer has a glass transition temperature $T_g$ of less than about -20°C, preferably less than about -40°C, more preferably less than about -50°C and most preferably less than about -60°C. The glass transition temperature or glass transition temperatures can be determined by differential scanning calorimetry (DSC) as is well known in the art.

Additionally, it is preferred that the amorphous polymer has a surface tension of less than about 50 mN/m at 20°C, preferably less than about 40 mN/m at 20°C. The surface tension can also be determined by methods known in the art (*cf.* S. Wu, J. Colloid. Interface. Sci. 31, 153, 1969; D.G. LeGrand, G.L. Gaines, Jr., J. Colloid. Interface Sci. 31, 162, 1969).

It is preferred that the amorphous polymer is a polyalkene. Preferred monomers for manufacturing the amorphous polymer are monomers selected from the group consisting of $C_2$ - $C_{12}$ alkenes, $C_4$ - $C_{12}$ alkadienes, and mixtures thereof, wherein the alkene and/or alkadiene may optionally be substituted with one or more bromine, chlorine or fluorine atoms. The alkene may be an $\alpha$-alkene or an internal alkene. The diene may be conjugated or non-conjugated.

Preferably, the $C_2$ - $C_{12}$ alkene is selected from the group consisting of ethene, propene, 1-butene, 2-butene, isobutene (2-methyl propene), 1-pentene, 1-hexene, 2-methyl-1-pentene, 4-methyl-1-pentene, 1-octene, and mixtures thereof.

Preferably, the $C_4$ - $C_{12}$ alkadiene is selected from the group consisting of butadiene, isoprene (2-methyl-1,3-butadiene), 2,4-dimethyl butadiene, penta-1,3-diene, 3-methyl-1,3-pentadiene, 2,4-hexadiene, 2-neopentyl-1,3-butadiene, 2-methyl-1,5-hexadiene, 2,5-dimethyl-2,4-hexadiene, 2-methyl-1,4-pentadiene, 2-methyl-1,6-heptadiene, cyclopentadiene, methyl cyclopentadiene, cyclohexadiene, 1-vinyl-cyclohexadiene, norbornadiene, 5-ethylidene-2-norbornene, divinylbenzene, dicylopentadiene, 1,4-hexadiene, 5-vinyl-2-norbornene, and mixtures thereof.

Amorphous polymers having a glass transition temperature of lower than about -20°C are known in the art and are for example disclosed in Kirk-Othmer, Encyclopedia of Chemical Technology, 4th Ed., Vol. 8, pages 905 - 1093, 1993, and 4th Ed, Vol. 9, pages 1 - 37, **1994,** and in the Polymer Handbook, 3rd Ed., J. Bandrup, E.H. Immergut (Eds.), 1989. The Polymer Handbook gives many examples for amorphous polymers having a glass transition temperature of lower than about -20°C: butyl rubber (non-vulcanised) of about -71°C, poly(1-hexene) (prepared by Ziegler-Natta catalysis; *cf.* ref. 1072: J. Bourdariat, R. Isnard, J. Odin, J. Polym. Sci., Polym. Phys. Ed. 11, 1817 - 1828, 1973) of about -58°C (page VI/213), isotactic poly(1-butene) (*cf.* for example R.W. Warfield, R. Brown, J. Polym. Sci. A-2 5, 791, 1967) of about -24°C (page VI/213), and poly(isobutene) of about -73°C (page VI/214). It should be noted that some of these polymers can sometimes be (partly) crystalline which is often dependent from catalyst compositions and process conditions employed in the polymerisation process. For example, EP 300.638 A2 discloses a process for the preparation of highly crystalline poly(1-butene). However, it can be envisaged that *e.g.* a certain polyisobutene, a certain polybutene or a certain butyl rubber, may have a glass transition temperature that differs from the value listed in the Polymer Handbook. Atactic polypropene has a glass transition temperature of about -20°C (*cf.* U. Gaur, B. Wunderlich, J. Phys. Chem. Ref. Data 10, 1052 - 1063, 1981).

Amorphous polymers having a surface tension of less than about 50 mN/m at 20°C are also known in the art. The Polymer Handbook, 3rd Ed., J. Bandrup, E.H. Immergut (Eds.), 1989 gives various examples for such amorphous polymers: polyisobutene ($M_n$ = 2300): 33.6 mN/m at 20°C; atactic polypropene: 29.4 mN/m at 20°C; branched polyethene ($M_n$ = 7000): 35.3 mN/m at 20°C; ethene propene copolymers ($M_w$ ranging from about 15.000 to about 63.000; propene content ranging from about 34 mol % to about 60 mol%): 30.7 - 33.8 mN/m at 20°C; poly(4-methyl-1-pentene): 25 mN/m at 20°C.

According to a preferred embodiment of the present invention, the amorphous polymer is preferably selected from the group consisting of:

(1) a polymer comprising about 50.0 % to about 98 % by weight of isobutene and about 2 % to about 50.0 % of a $C_2$ - $C_{12}$ alkene other than isobutene, a $C_4$ - $C_{12}$ alkadiene, or a mixture thereof, based on the total weight of the polymer;

(2) a polymer comprising more than about 98 % to about 100 % by weight of isobutene, based on the total weight of the polymer;

(3) a polymer comprising about 50.0 % to about 99.9 % by weight of propene and about 0.1 % to about 50.0 % of a $C_2$ - $C_{12}$ alkene other than propene, a $C_4$ - $C_{12}$ alkadiene, or a mixture thereof, or about 100 wt.% propene, based on the total weight of the polymer;

(4) a polymer comprising about 0.1 % to about 50.0 % by weight of ethene and about 50.0 % to about 99.9 % of a $C_2$ - $C_{12}$ alkene other than ethene, a $C_4$ - $C_{12}$ alkadiene, or a mixture thereof, based on the total weight of the polymer;

(5) a polymer comprising about 0.1 % to about 50.0 % by weight of 2-methyl-1-pentene and about 50.0 % to about 99.9 % of a $C_2$ - $C_{12}$ alkene other than 2-methyl-1-pentene, a $C_4$ - $C_{12}$ alkadiene, or a mixture thereof, or about 100 wt.% 2-methyl-1-pentene, based on the total weight of the polymer; and

(6) mixtures of (1), (2), (3), (4) and/or (5).

Examples for group (1) include "polyisobutenes", "polybutenes" and "butyl rubbers". Examples for group (2) include "polyisobutene homopolymers". Examples for group (3) include ethene-propene elastomers, EPDM elastomers and atactic polypropenes. Examples for group (4) include ethene butene copolymers. Examples for group (5) include homopolymers of 2-methyl-1-pentene.

According to a more preferred embodiment of the present invention, the amorphous polymer is selected from the group consisting of polyisobutenes, polybutenes, butyl rubbers, atactic polypropene, copolymers of propene and a $C_2$ - $C_{12}$ alkene other than propene (and optionally a diene), copolymers of ethene and a $C_2$ - $C_{12}$ alkene other than ethene (and optionally a diene), and mixtures thereof. According to an even more preferred embodiment of the present invention, the amorphous polymer is selected from the group consisting of ethene-propene copolymers, ethene-butene copolymers, ethene-propene-butene terpolymers, ethene-propene-diene copolymers, polyisobutenes, polybutenes, butyl rubbers, atactic polypropenes and mixtures thereof.

Even more preferably, the amorphous polymer is selected from the group consisting of polyisobutenes, polybutenes, butyl rubbers, atactic polypropenes and mixtures thereof. Yet even more preferably, the amorphous polymer is selected from the group consisting of (1), (2) and a mixture thereof, wherein (1) and (2) are polymers as defined above. Yet even more preferably, the amorphous polymer is selected from the group consisting of polyisobutenes, polybutenes, butyl rubbers and mixtures thereof. Yet even more preferably, the amorphous polymer is a polyisobutene, and preferably the polyisobutene is a polyisobutene homopolymer. All these polymers have a glass transition temperature of less than about -20°C as is disclosed above.

The polybutene has preferably also a number average molecular weight $M_n$ of about 500 to about 20.000, more preferably of about 1.300 to about 20.000, a molecular weight distribution of about 1.5 to about 3, a density of about 0.90 to about 0.98 g/cm$^3$ and a kinematic viscosity of about 200 cSt (mm$^2$.s$^{-1}$) to about 100.000 cSt (mm$^2$.s$^{-1}$) at 100°C according to ASTM D 445 (data in Saybolt Universal Seconds which are used in *e.g.* the Ineos datasheet September 2008 can be converted into mm$^2$.s$^{-1}$ according to ASTM D 2161). Suitable polybutenes include for example several Indopol grades available from Ineos (Great Britain), several polybutene grades available from Kermat (Belgium), several Nisseki polybutene grades available from JX Nippon Oil & Energy, and several KVIS grades available from Kothari Petrochemicals (India). For example, Indopol H-300 has a glass transition temperature of about -66.9°C (DSC), a number average molecular weight $M_n$ of about 1.300 (GPC), a molecular weight distribution of about 1.65 (GPC), a density of about 0.904 g/cm$^3$ and a kinematic viscosity of about 605 to about 655 cSt at 100°C (Ineos datasheet September 2008). Indopol H-18000 has a number average molecular weight $M_n$ of about 6.000 (GPC), a molecular weight distribution of about 1.70 (GPC), a density of about 0.921 g/cm$^3$ and a kinematic viscosity of about 36.000 to about 45.000 cSt at 100°C (Ineos datasheet September 2008). KVIS 30 has a molecular weight of about 1.250 to about 1.350, a kinematic viscosity of about 600 to 697 cSt at 100°C and a density of about 0.8910 to about 0.910 g/cm$^3$.

The butyl rubber has preferably a Mooney viscosity ML 1 + 8 (ASTM D 1646; 125°C) of about 25 to about 75 and a level of unsaturation of about 1.0 to about 3.0 mol%. Suitable materials include Exxon™ Butyl Rubber which has a density of 0.92 g/cm$^3$ and Lanxess Butyl 101-3 which has a density of 0.92 g/cm$^3$, a Mooney viscosity ML 1 + 8 (ASTM D 1646; 125°C) of 51 ± 5 and an unsaturation of 1.75 ± 0.20 mol %.

The poly(2-methyl-1-pentene) has preferably a melt index of about 1 to about 250 g/min (ASTM D 1236, 260°C, 5 kg), a softening point of about 160° to about 200°C (Vicat, ASTM D 1525) and a density of about 0.82 to about 0.95 g/cm$^3$ at 25°C. Amorphous poly(2-methyl-1-pentene) having a low glass transition temperature is for example disclosed by Haiyang Gao, Xiaofang Liu, Ying Tang, Jin Pan and Qing Wu, Polym. Chem. 2(6), 1398 - 1403, 2011.

The ethene-propene copolymers, ethene-butene copolymers and ethene-propene-butene terpolymers have preferably a Brookfield viscosity (sometimes also referred to as melt viscosity) of about 300 to about 200.000 mPa.s at 190°C according to ASTM D 3236. Suitable products include certain Eastoflex grades which are available from Eastman Chemical Company, Rextac® grades of Rextac LLC and Vestoplast® grades of Evonik. The ethene-propene copolymer Eastoflex 1045 has for example a Brookfield viscosity of about 4.500 mPa.s (ASTM D 3236) and a glass transition temperature of -22°C whereas Eastoflex E1003 has a Brookfield viscosity of about 300 mPa.s (ASTM D 3236) a glass transition temperature of -33°C (*cf.* Eastman brochure "Eastoflex™ - amorphous polyolefins", 2009). Other examples include Vestoplast® 703 which has a glass transition temperature of about -28°C and a Brookfield viscosity of about 2.700 mPa.s at 190°C and Vestoplast® 792 which has a glass transition temperature of about-27°C and a Brookfield viscosity of about 120.000 mPa.s at 190°C (Evonik brochure "Flying the flag for customized solutions", 2013). In such amorphous propene copolymers and terpolymers, the amount of propene is preferably at least about 50 percent by weight, and is preferably between about 70 to about 98 percent by weight, based on the total weight of the atactic propene copolymer.

The atactic polypropene has a Brookfield viscosity of about 200 to about 10000 mPa.s at 190°C according to ASTM D 3236. Suitable products include Polytac™ grades of Crowley Chemical Company and Rextac® grades of Rextac LLC. For example, Polytac™ grades have a Brookfield viscosity in the range of about 500 to about 2.500 mPa.s at 190°C and Rextac® 2104, 2115 and 2180 have a Brookfield viscosity of 400, 1.500, and 8.000 mPa.s, respectively, at 190°C.

The polyisobutene has preferably a number average molecular weight $M_n$ of about 500 to about 1.000.000, more preferably within the range of about 1.000 to about 800.000. In a preferred embodiment, the polyisobutene has a number average molecular weight $M_n$ in the range of about 1.000 to about 600.000, more preferably within the range of about 1.000 to about 300.000, even more preferably in the range of about 1.500 to about 180.000 and in particular within the range of about 2.000 to about 150.000.

The molecular weight distribution $M_w/M_n$ of the polyisobutene is preferably between 1 to about 10, more preferably 1 to about 5, even more preferably 1 to about 4 and most preferably about 1.5 to about 3.5.

The number average molecular weight $M_n$ of the polyisobutene is determined by GPC for the lower molecular weights, *e.g.* up to about 100.000. For the higher number average molecular weights, they are determined by viscosity measurements (Staudinger Index $J_o$, formerly known as intrinsic viscosity), wherein the Staudinger Index is calculated from the flow time at 20°C through capillary 1 of an Ubbelohde viscometer (for measuring the flow time, a diluted polymer solution is used) using the following formulas:

$$J_o = \eta_{sp} \, / \, c \, (1 + 0.31 \times \eta_{sp}) \, [cm^3/g]$$

$$\eta_{sp} = (t/t_o) - 1$$

wherein t is the flow time of the solution, with Hagenbach-Couette correction, $t_o$ is the flow time of the solvent (*e.g.* isooctane), with Hagenbach-Couette correction, and c is the concentration if the solution in $g/cm^3$. The number average molecular weight $M_n$ and the viscosity average molecular weight $M_v$ are then calculated as follows:

$$M_n = \sqrt[0.94]{\frac{J_o \times 1000}{2.27}}$$

$$M_v = \sqrt[0.65]{\frac{J_o \times 100}{3.06}}$$

Reference is made to the BASF brochure "Glissopal® 1000, 1300 and 2300" of December 2005, to the BASF brochure "Oppanol® B types" (B10 to B15) of January 2009 and to the BASF brochure "Oppanol® B types" (B30 to B80) of January 2009.

The polyisobutene to be used in the composition according to the present invention preferably has a Staudinger Index $J_o$ of about 1 to about 1.500 $cm^3/g$, preferably of about 2 to about 1.000 $cm^3/g$, as determined at 20°C. In a preferred embodiment the polyisobutene has a Staudinger index $J_o$ of about 1 to about 500 $cm^3/g$, preferably of about 2 to about 300 $cm^3/g$ and more preferably of about 3 to about 150 $cm^3/g$.

The polyisobutene has further preferably a surface tension of less than about 40 mN/m at 20°C.

The density of the polyisobutene is preferably between about 0.86 to about 0.98 $g/cm^3$.

The polyisobutene may be prepared in various ways. Polymerisation may be conducted in single stage processes or in multi stage processes. It is preferred that the polymerisation is conducted in the liquid phase using a Lewis acid as catalyst, preferably boron trifluoride complex catalyst, optionally in the presence of a cocatalyst. Such processes are well known in the art.

Preferred polyisobutenes are from the Glissopal, the Oppanol grades and mixtures thereof, in particular Oppanol grades and mixtures thereof, which are commercially available from BASF, in particular from the Oppanol B type. Other preferred polyisobutenes are available from Nippon Oil, in particular the Tetrax grades. These polyisobutenes are in this document classified as "polyisobutene homopolymers", *i.e.* polymers comprising more than about 98 wt.% of isobutene, based on the total weight of the polymer.

Most preferred polyisobutenes are the Oppanol B10, B11, B12, B13, B14, B15 grades and mixtures thereof. These grades have a viscosity average molecular weight $M_v$ in the range of about 35.000 to about 90.000 (calculated according to the formula $J_o = 3.06 \times 10^{-2} \times M_v^{0.65}$). Other most preferred polyisobutenes are the Tetrax 3T, 4T, 5T and 6T grades and mixtures thereof. These grades have a viscosity average molecular weight $M_v$ in the range of about 30.000 to about 100.000 (*cf.* the product guide (not dated) available from the website www.noe.jx-group.co.jp).

**The hydrocarbon wax**

The hydrocarbon wax is characterised by having a melting point of about 35° to about 130°C.

According to the invention, the hydrocarbon wax is a microcrystalline wax or a paraffin wax essentially containing only carbon and hydrogen.

Microcrystalline wax is for example available from Shell (Shell Microcrystalline Wax MMP) and Gehring-Montgomery, Inc. (Ter Wax MMP). It is preferred that the microcrystalline wax has a congealing point of about 65 to about 85 °C as determined according to ASTM D 938-12, more preferably about 70 to about 80°C. It is also preferred that microcrystalline wax has a penetration at 25°C of about 10 to about 120 x $10^{-1}$ mm as determined according to ASTM D1321-10, more preferably about 10 to about 50 x $10^{-1}$ mm. It is furthermore preferred that the microcrystalline wax has a kinematic viscosity at 100°C of about 5 to about 25 mm$^2$/s, more preferably about 10 to about 15 mm$^2$/s.

The congealing point is the temperature at which a wax while cooling develops a "set" or resistance to flow (*cf.* ASTM D 938). At that temperature, the wax is close to the solid state. The congealing point is therefore close to the melting point.

Paraffin wax is for example available from Sasol (Sasolwax® paraffin wax) and Industrial Raw materials LLC (Indrawax®). The paraffin wax has preferably a melting point of about 35° to about 130°C, preferably about 40° to about 120°C. The term "paraffin wax" also includes products known as Vaseline, petrolatum and petroleum jelly.

Petrolatum and petroleum jelly are for example available from Sasol (MERKUR®, VARA®). Petrolatum and petroleum jelly have preferably a melting point or a melting range of about 35° to about 130°C, preferably about 40° to about 120°C.

**The composition**

The composition comprises a blend comprising about 70 to about 95 wt.% of an amorphous polymer and about 5 to about 30 wt.% of a hydrocarbon wax, based on the total weight of the blend, the composition containing at least 30 wt.% of said blend, based on the total weight of the composition.

Preferably, the composition contains at least 35 wt.% of the blend, more preferably at least 40 wt.%, even more preferably at least 50 wt.%, yet even more preferably at least 60 wt.%, yet even more preferably at least 70 wt.% and most preferably at least 80 wt.%, based on the total weight of the composition.

According to a first preferred embodiment, the composition does not comprise a filler material. Such compositions preferably contain about 80 wt.% to about 99.9 wt.% of the blend and about 0.1 wt.% to about 20 wt.% of an additive. The additive is preferably selected from the group consisting of anti-oxidants, colorants, pigments and mixtures thereof. More preferably, compositions according to this first embodiment contain 90 wt.% to about 99.9 wt.% of the blend and about 0.1 wt.% to about 10 wt.% of an additive.

According to a second preferred embodiment, the composition comprises a filler material. Filler materials are advantageous when enhanced mechanical strength of the composition as described hereinbefore is desired, in particular when applied vertically. However, in compositions as described hereinbefore, the amount of filler can be low or the filler can even be omitted which results in a lower viscosity of these compositions. This may be beneficial in certain applications as this provides an improved processability.

Compositions comprising a filler material preferably comprise about 5 to about 70 wt.% of filler material and about 30 to about 95 wt.% of the blend comprising an amorphous polymer and a hydrocarbon wax, based on the total weight of the composition.

According to a third preferred embodiment, compositions comprising a filler material comprise about 5 to about 40 wt.% of filler material and about 60 to about 95 wt.% of the blend comprising the amorphous polymer and the hydrocarbon wax, based on the total weight of the composition. According to this embodiment, preferred compositions are those which comprise about 5 to about 30 wt.% of filler material and about 70 to about 95 wt.% of the blend comprising the amorphous polymer and the hydrocarbon wax, based on the total weight of the composition. More preferred compositions are those which comprise about 10 to about 20 wt.% of filler material and about 80 to about 90 wt.% of the blend comprising the amorphous polymer and the hydrocarbon wax, based on the total weight of the composition.

According to another preferred embodiment, compositions comprising a filler material comprise more than about 40 to about 60 wt.% of filler material and about 40 to less than about 60 wt.% of the blend comprising the amorphous polymer and the hydrocarbon wax, based on the total weight of the composition. According to this preferred embodiment, preferred compositions are those which comprise about 50 to about 60 wt.% of filler material and about 40 to about 50 wt.% of the blend comprising the amorphous polymer and the hydrocarbon wax, based on the total weight of the composition.

Different materials may be used as a filler. The filler material preferably comprises an inorganic material such as inorganic minerals, salts and oxides, *e.g.* chalk, boron sulphate, aluminium oxide, calcium carbonate, silicon dioxide, limestone, sand, granite, quartz, glass, talc, slate and bentonite. For example, the minerals calcite, aragonite and vaterite are calcium carbonate minerals. Preferably, the filler material is a calcite based material which may be of natural or synthetic origin (such as marble) and/or a silica based material (such as quartz). Optionally, the filler material may be constituted from different sources having different particle sizes and different particle size distributions. However, it is preferred that that the maximum average particle size is about 1 mm or less and that the minimum average particle size is about 3 $\mu$m or more.

It is preferred that the filler material has a density of about 2.0 to about 4.0 kg/dm$^3$, preferably about 1.5 to about 3.5 kg/dm$^3$, at 20 C according to NEN-EN-ISO 787/10-1995. It is furthermore preferred that the filler material consists essentially of an inorganic material, preferably at least 75 wt. %, more preferably at least 90 wt. % and most preferably at least 95 wt.%, based on the total weight of the filler material. It is furthermore preferred that the filler material has a very low water solubility, preferably of less than 0.1 g/l (20°C; according to NEN-EN-ISO 787/8-2000), more preferably less than 0.05 g/l.

The composition may further comprise an additive, *e.g.* an anti-oxidant, a colorant, a pigment or a mixture thereof. Preferably, the composition comprises about 0.1 wt.% to about 20 wt.% of an additive, more preferably, about 0.1 wt.% to about 10 wt.% of an additive, based on the total weight of the composition.

The amorphous polymer and hydrocarbon wax, and preferred embodiments thereof, are described in more detail above.


**Anti-oxidant**


According to a preferred embodiment of the present invention, the composition as described hereinbefore comprises an anti-oxidant. The anti-oxidant may be a primary anti-oxidant, a secondary anti-oxidant, a multifunctional anti-oxidant (*i.e.* an antioxidant combining primary and secondary anti-oxidant functions) or a lactone. The antioxidant may also comprise a combination of two or more antioxidants.

The anti-oxidant is preferably present in an amount of about 0.05 to about 5 wt.%, preferably about 0.1 to about 4 wt.%, more preferably of about 0.2 to about 3 wt.% and most preferably about 0.3 to about 2 wt.%, based on the total weight of the composition.

According to the present invention, the primary antioxidants are preferably selected from the group consisting of sterically hindered phenol compounds, sterically hindered alkylthiomethylphenol or arylthiomethylphenol compounds, and secondary aromatic amines. Such compounds are well known in the art and include the sterically hindered phenol compounds 2,6-di-t-butyl-4-methylphenol, Irganox® 1330, Irganox® 1010, Irganox® 1098, Irganox® 1076, Irganox® 245, Irganox® 259, Irganox® 1035, Irganox® 2246, Irganox® 3114 and Irganox® 3125, the sterically hindered alkylthiomethylphenol Irganox® 1520, *i.e.* 2,4-di-octylthiomethyl-6-methylphenol, and the secondary aromatic based antioxidant comprising (polymerized) 1,2-dihydro-2,2,4-trimethylquinoline, such as for example Agerite® MA.

According to the present invention, the secondary antioxidants are preferably selected from the group consisting of phosphites and thio-esters. Suitable secondary antioxidants are for example Irgafos® 168, Irgafos® 12 and Irgafos® P-EPQ (all phosphites), and Lowinox® TBM-6, BNX® DLTDP (CAS No. 123-28-4) and Morstille 18 DSTDP (all thio-esters).

The multifunctional antioxidant preferably comprises both a primary and a secondary antioxidant function. Examples of multifunctional antioxidants are Irganox® L 115 and Irganox® 565.

An example of a lactone that can be used as antioxidant is Irganox® HP-136.

According to the present invention, the composition preferably comprises a primary antioxidant, wherein the primary anti-oxidant is preferably selected from the group of sterically hindered phenol compounds and secondary aromatic amines, most preferably from the group of sterically hindered phenol compounds.

According to the present invention, the composition preferably comprises a secondary antioxidant, wherein the secondary anti-oxidant is preferably selected from the group of phosphites.

According to a more preferred embodiment, the composition comprises a combination of a primary antioxidant and a secondary antioxidant, preferably a combination of a primary antioxidant and a secondary antioxidant which have a synergistic effect. A suitable combination is Irganox® 1010 and Irgafos® 168.

According to an even more preferred embodiment, the composition comprises a combination of a primary antioxidant, a secondary antioxidant and a lactone. In a further preferred embodiment the lactone is Irganox® HP-136.

Further examples of primary antioxidants, secondary antioxidants, multifunctional antioxidants and lactones are for example disclosed in US 7.608.343, incorporated by reference.

**Wrapping tape**

The invention also relates to a wrapping tape for the protection of an article against corrosion, wherein the tape comprises a layer of the composition as described hereinbefore. Such wrapping tapes are for example disclosed in US 7.608.343. Wrapping tapes (also known in the art as wrapping bands) are spirally wound or wrapped around the article to be protected with various degrees of overlap.

Accordingly, the present invention relates to a wrapping tape comprising: (a) a backing layer and (b) a layer comprising the composition as described hereinbefore.

Preferred materials for layer (a) are polymers and/or copolymers of one or more $\alpha$-olefins and/or diolefins, preferably ethane, propene and butadiene. The $\alpha$-olefins may be halogenated. More preferably, the material for layer (a) is selected from the group consisting of polyvinyl chloride, polyethene, polypropene, ethene-propene-diene, polytetrafluoroethene and poly(ethene-co-tetrafluoroethene).

According to another embodiment, layer (a) is an urethane backing layer or an epoxy backing layer.

The wrapping tape preferably comprises a further layer (c) to protect layer (b). Especially when transported such a protecting layer (c) enables that the wrapping tape can easily be winded on a bobbin, a spool or other suitable means, and prevents inter-adhesion of the layers of the tape. Layer (c) may for example have the function of a release liner, which is removed from the tape during application of the tape. Layer (c) may for example be a layer of polyvinyl chloride, a nonwoven cloth, a rubber or an elastomer, or a polyurethane.

Moreover, the wrapping tape may have between layers (a) and (b) a further layer (d) comprising a reinforcing net-like layer having a woven, knitted or spool-knitted structure and that can preferably be deformed in two orthogonal directions. The reinforcing net-like layer can be manufactured from polyolefin fibres, *e. g.* fibres made from ethane homopolymers or copolymers or propene homopolymers or copolymers, as is well known in the art.

The wrapping tape according to the invention has preferably a total thickness of about 0.5 to about 20 mm, more preferably of about 0.5 to about 15 mm, even more preferably of about 0.5 to about 10 mm and most preferably of about 0.5 to about 7 mm. The width of the tape can obviously be adjusted as desired or as suitable, but is preferably about 2.0 to about 100.0 cm, more preferably about 2.5 to about 75.0 cm, even more preferably about 3.0 to about 70.0 cm, even more preferably about 4.0 to about 65.0 cm and most preferably about 5.0 to about 60.0 cm. The length of the tape can obviously also be adjusted as desired or as suitable. A tape with a length of for example several meters may be wound around a bobbin or spool prior to use. However, the tape may also be in the form of a sheet. The length and width of said sheet can obviously be adjusted as desired or as suitable.

The thickness of layer (a) is preferably about 10 $\mu$m to about 2000 $\mu$m, more preferably about 10 to about 1000 $\mu$m, even more preferably about 10 to about 500 $\mu$m, and most preferably about 20 $\mu$m to about 300 $\mu$m.

The wrapping tape for the protection of a shaped article against corrosion as defined hereinbefore can be produced by laminating a composition according to the present invention onto a backing layer.

After said lamination step, the surface of layer (b) not being in contact with layer (a) can be protected by a layer (c)

If a layer (d) is present between layers (a) and (b) as described above, layers (a) and (d) are first laminated where after a layer (b) is applied to the surface of layer (d) opposite the surface of layer (d) that is in contact with layer (a).

After the wrapping tape is manufactured, it can be wrapped around a bobbin or a spool.

The wrapping tape comprising the composition as described hereinbefore show a performance in the cathodic disbondment test (23°C, 28 days, test method according to ISO 21809-3 (2008), Annex F), of less than 10 mm, preferably less than 5 mm, more preferably less than 2 mm.

The wrapping tape comprising the composition as described hereinbefore passes the hot water immersion test (95°C, 28 days, test method according to ISO 21809-3 (2008), Annex I).

**Applications**

The composition as described hereinbefore and the wrapping tape according to the invention is used for protecting a shaped article against corrosion. The article in particular comprises metals, metal alloys (*e.g.* steel), metal compositions and/or concrete. The shaped article is preferably selected from the group consisting of oil lines, oil pipes, gas lines, gas pipes, man hole covers, tanks, welding joints, flanges, crane hooks, thermit weldings and T-joints.

The shaped articles may be located subterranean or superterranean.

The composition and the wrapping tape may be applied to the outer surface or the inner surface of the article where appropriate.

Before applying the composition or the wrapping tape, there is no need to apply a primer to the surface of the shaped article.

Another advantage is that the composition does not feel sticky, although it adheres well to the surface of the shaped article.

The composition as described hereinbefore is also non-pressure sensitive, *i.e.* no pressure needs to be applied to the composition or the wrapping tape when applied to the surface of the shaped article. Furthermore, when applied trapping of air does not occur.

The composition has a high shear strength and a high resistance against cohesive fracture (crack propagation through the composition).

Advantages of the composition as described hereinbefore include an improved handleability and processability. For example the tackiness of a composition as described hereinbefore is reduced as compared to e.g. a composition that does not comprise a wax. Furthermore, the viscosity of a composition according to the invention is reduced as compared to e.g. a composition that does not comprise a wax, in particular at elevated temperatures.

**Examples**

Example 1

Mixtures without filler were prepared by mixing polyisobutene (Oppanol B10 from BASF), hydrocarbon wax (Microcrystalline Wax MMP from Shell) and optionally antioxidants at an elevated temperature (about 140°C). The compositions are shown in Table 1.

Table 1

| Component | Mixture No. 1 | Mixture No. 2 | Mixture No. 3 |
|---|---|---|---|
| Polyisobutene (wt.%) | 89.48 | 90.00 | 74.49 |
| Hydrocarbon wax (wt.%) | 10.18 | 10.00 | 25.51 |
| Irgafos 168 (wt.%) | 0.17 | 0.00 | 0.00 |
| Irganox 1010 (wt.%) | 0.17 | 0.00 | 0.00 |
| Total (wt.%) | 100.000 | 100.00 | 100.00 |

Oppanol B10 has a $M_v$ of 40000, Staudinger Index $J_o$ = 27.5 - 31.2 $cm^3/g$, $M_w$ = 36000, molar mass distribution =3.0, dynamic viscosity = 40.000 at 150°C, glass transition temperature $T_g$ = -65°C (BASF brochure "Oppanol® B types" (B10 to B15) of January 2009; incorporated by reference).

Microcrystalline Wax MMP has a congealing point of 70 - 76°C according to ASTM D 938 (product data sheet November 2009; incorporated by reference).

All mixtures were not tacky at ambient temperature. All mixtures adhered very well to stainless steel surfaces within the temperature range of -20° to 65°C. The adhesion strength was similar to that of pure polyisobutene. All mixtures could still be processed at -48°C.

The mixtures could be processed by spraying at about 150° to about 170°C and by brushing using a at about 80°C.

Example 2

Mixtures with filler (quartz sand) were prepared by mixing polyisobutene (Oppanol B10 from BASF), hydrocarbon wax (Microcrystalline Wax MMP from Shell) and optionally antioxidants and elevated temperature (about 135°C). The compositions are shown in Table 2.

Table 2

| Component | Mixture No. 4 | Mixture No. 5 |
|---|---|---|
| Polyisobutene (wt.%) | 61.70 | 61.70 |
| Hydrocarbon wax (wt.%) | 9.63 | 19.63 |
| Irgafos 168 (wt.%) | 0.17 | 0.17 |
| Irganox 1010 (wt.%) | 0.17 | 0.17 |
| Filler (wt.%) | 28.33 | 18.33 |
| Total (wt.%) | 100.000 | 100.00 |

All mixtures were not tacky at ambient temperature. All mixtures adhered very well to stainless steel surfaces within the temperature range of -20° to 65°C. The adhesion strength was similar to that of pure polyisobutene. All mixtures could still be processed at -48°C.

Mixtures No. 4 and 5 could be processed by spraying at about 55°C.

Example 3

*Cathodic disbondment test*

The cathodic disbondment test is a well known and generally accepted laboratory test for pipeline coatings (cf. for example www.nace.org and E. Broesder, "Coatings and Cathodic Disbondment - The True Story", Full Paper presented at the annual meeting of CEOCOR, Lucerne (Switzerland), May 2012).

In this test, an artificial defect (the diameter of the defect is dependent from the standard used) is made in the coating all the way to the bare steel of the pipeline. The bare steel in the damage is brought into contact with an electrolyte by attaching a cell containing the electrolyte over the defect. An inert counter electrode (anode) and a reference electrode are also immersed in the electrolyte. The test specimen and the counter electrode are connected to a power supply. The power supply is switched on and adjusted until the potential measured between the reference electrode and the test specimen reaches a required value. Adjusting of the applied potential must be done frequently and the current must be recorded as well.

The test is terminated after the prescribed period of time (usually 28 days). The test specimen is then disconnected and disbondment of the coating is visually inspected by making radial cuts in the coating surrounding the defect, followed by gentle lifting of the coating. The area of disbondment is measured and recorded. A low diameter indicates a good test result.

A test specimen was prepared using a steel pipe 2 ½ inch (diameter) x 300 mm (length), The surface cleanliness was Sa 2 ½. The surface was cleaned with isopropanol and subsequently dried. A wrapping tape (width 50 mm) was then applied to the steel pipe by a spiral wrapping technique using tension which created 50% overlap, resulting in a coating of two layers of wrapping tape.

The wrapping tape consisted of a PVC backing (400 - 500 $\mu$m thickness) and a layer (about 1 mm thickness) of a corrosion protecting composition having the following composition:

(a) 28.9 wt.% polyisobutene (Oppanol® B15);
(b) 6.5% wt.% Petrolatum (VARA® 4800);
(c) 7.0 wt. % polyisobutene (Glissopal® 2300);
(d) 57.6 wt.% mineral filler (calcium carbonate Omyalite 95 T).

Oppanol B15 has the following properties: $M_v$ = 85000, Staudinger Index $J_o$ = 45.9 - 51.6 cm$^3$/g, $M_w$ = 75000, molar mass distribution =3.4, dynamic viscosity = 700.000 at 150°C, glass transition temperature $T_g$ = -64°C (BASF brochure "Oppanol® B types" (B10 to B15) of January 2009; incorporated by reference).

VARA® 4800 has the following properties: congealing point = 50 - 56 °C, melting range = 38 - 64 °C, kinematic viscosity = 8 mm$^2$/s at 100 °C (Sasol brochure "MERKUR, VARA" of March 2009; incorporated by reference).

Glissopal 2300 has the following properties: $M_n$ = 2300, molar mass distribution = 1.8, kinematic viscosity = 1500 mm$^2$/s at 100°C, density = 0.90 kg/m$^3$ (BASF brochure "Glissopal® 1000, 1300 and 2300" of December 2005; incorporated by reference).

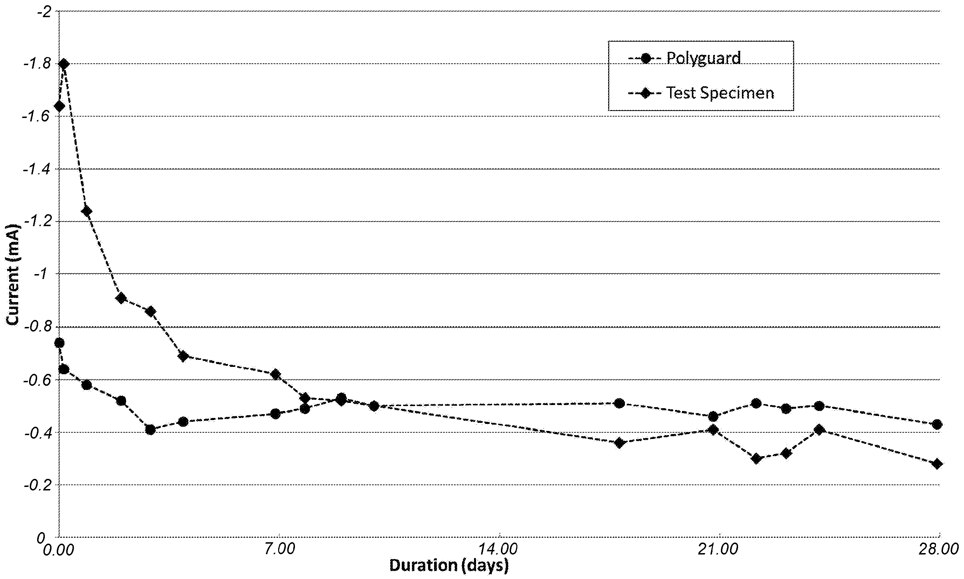

A test was conducted with the specimen according to ISO 21809-3 (2008), Annex F, at 23°C. After 28 days, the disbondment was inspected: self-healing had partially completed, the diameter of the artificial defect was reduced from initially about 6 mm to about 2 mm and the cathodic disbondment was about 1.5 to about 2 mm. The results of the current measurement are shown in Figure 1 which includes the results obtained with Polyguard RD-6® as reference. Polyguard RD-6® is commercially available from Polyguard Products Inc., Ennis, Texas, USA. Polyguard RD-6® is a propene geotextile backed protective tape having a rubberized bitumen as adhesive layer and is used for providing corrosion protection to pipe lines.

Example 4

*Reduced tackiness*

Mixtures 1-5 as described above were applied to a steel substrate (abrasive blast cleaning acc. ISO 8504-2, Sa 2 ½ cleanliness acc. ISO 8501-1, roughness profile of approx. 50 microns acc. ISO 8503-5) at a temperature of 21°C (+/- 2°C). Immediate bonding to the substrate was not observed, making it possible to move the product around in order to achieve proper positioning. Full adhesion was achieved after several hours dwell time, as observed by peeling the product from the substrate (cohesive separation, > 95% coverage).

Compositions that do not comprise a wax show a different behaviour.

Example 5

*Lap shear test*

A composition according to the invention comprising a wax was found to have a higher value of the lap shear resistance (ISO 21809-3 Annex L). A 1 mm layer of a composition as described above comprising (a) 28.9 wt.% polyisobutene (Oppanol® B15), (b) 6.5% wt.% Petrolatum (VARA® 4800), (c) 7.0 wt. % polyisobutene (Glissopal® 2300) and (d) 57.6 wt.% mineral filler (calcium carbonate Omyalite 95 T) was applied to a 0.5 mm backing foil of an EVA/LDPE blend. The lap shear strength at 23°C was 0.040 N/mm$^2$, and the lap shear strength at 70°C was 0.0027 N/mm$^2$.

**Claims**

1.   Use of a composition for the protection of an article against corrosion, wherein the composition comprises a blend comprising about 70 to about 95 wt.% of an amorphous polymer and about 5 to about 30 wt.% of a hydrocarbon wax, based on the total weight of the blend, the composition containing at least 30 wt.% of said blend, based on the total weight of the composition, wherein:

(a) the amorphous polymer is a hydrocarbonaceous polymer and has a glass transition temperature $T_g$ of lower than about -20°C; and
(b) the hydrocarbon wax has a melting point of about 35° to about 130°C, wherein the hydrocarbon wax is a microcrystalline wax or a paraffin wax essentially containing only carbon and hydrogen.

2.   Use according to Claim 1, wherein the amorphous polymer is partly halogenated, preferably by bromine, chlorine or fluorine and/or wherein the hydrocarbon wax contains elements other than carbon and hydrogen, such as sulfur, oxygen and/or nitrogen.

3.   Use according to Claim 1 or Claim 2, wherein the amorphous polymer is selected from the group consisting of:

(1) a polymer comprising about 50.0 % to about 98 % by weight of isobutene and about 2 % to about 50.0 % of a $C_2$ - $C_{12}$ alkene other than isobutene, a $C_4$ - $C_{12}$ alkadiene, or a mixture thereof, based on the total weight of the polymer;
(2) a polymer comprising more than about 98 % to about 100 % by weight of isobutene, based on the total weight of the polymer;
(3) a polymer comprising about 50.0 % to about 99.9 % by weight of propene and about 0.1 % to about 50.0 % of a $C_2$ - $C_{12}$ alkene other than propene, a $C_4$ - $C_{12}$ alkadiene, or a mixture thereof, or about 100 wt.% propene, based on the total weight of the polymer;
(4) a polymer comprising about 0.1 % to about 50.0 % by weight of ethene and about 50.0 % to about 99.9 % of a $C_2$ - $C_{12}$ alkene other than ethene, a $C_4$ - $C_{12}$ alkadiene, or a mixture thereof, based on the total weight of the polymer;
(5) a polymer comprising about 0.1 % to about 50.0 % by weight of 2-methyl-1-pentene and about 50.0 % to about 99.9 % of a $C_2$ - $C_{12}$ alkene other than 2-methyl-1-pentene, a $C_4$ - $C_{12}$ alkadiene, or a mixture thereof, or about 100 wt.% 2-methyl-1-pentene, based on the total weight of the polymer; and
(6) a mixture of (1), (2), (3), (4) and/or (5).

4.  Use according to any one of Claims 1 - 3, wherein the amorphous polymer is selected from the group consisting of (1) and (2), and a mixture thereof.

5.  Use according to any one of Claims 1 - 4, wherein the amorphous polymer has a number average molecular weight $M_n$ in the range of 1.000 to 150.000 g/mol.

6.  Use according to any one of Claims 1 - 5, wherein the composition contains about 80 wt.% to about 99.9 wt.% of the blend and about 0.1 wt.% to about 20 wt.% of an additive.

7.  Use according to any one of Claims 1 - 6, wherein the composition comprises a filler material.

8.  Use according to Claim 7, wherein the composition comprises about 5 to about 70 wt.% of filler material and about 30 to about 95 wt.% of the blend comprising the amorphous polymer and the hydrocarbon wax, based on the total weight of the composition.

9.  Use according to Claim 7 or 8, wherein the composition comprises about 5 to about 40 wt.% of filler material and about 60 to about 95 wt.% of the blend comprising the amorphous polymer and the hydrocarbon wax, based on the total weight of the composition.

10. Use according to Claim 7 or 8, wherein the composition comprises more than about 40 to about 60 wt.% of filler material and about 40 to less than about 60 wt.% of the blend comprising the amorphous polymer and the hydrocarbon wax, based on the total weight of the composition.

11. Use according to any one of Claims 1 - 10, wherein the composition comprises an additive.

12. Use according to Claim 6 or Claim 11, wherein the additive is selected from the group consisting of anti-oxidants, colorants, pigments and mixtures thereof.

13. Use according to Claim 11 or Claim 12, wherein the additive is an anti-oxidant.

14. Use according to Claim 13, wherein the anti-oxidant is present in an amount of about 0.05 to about 5 wt.%, based on the total weight of the composition.

15. Use according to Claim 13 or Claim 14, wherein the anti-oxidant is selected from the group consisting of primary anti-oxidants, secondary anti-oxidants, multifunctional anti-oxidants, lactones, and combinations of two or more of said anti-oxidants.

16. Wrapping tape comprising (a) a backing layer, and (b) a layer comprising a composition as defined in any one of Claims 1 - 15.

17. Wrapping tape according to Claim 16, wherein the wrapping tape has a total thickness of about 0.5 to about 20 mm.


**Patentansprüche**

1.  Verwendung einer Zusammensetzung zum Schutz eines Gegenstands gegen Korrosion, wobei die Zusammensetzung eine Mischung umfasst, die etwa 70 bis etwa 95 Gew.-% eines amorphen Polymers und etwa 5 bis etwa 30 Gew.-% eines Kohlenwasserstoffwachses umfasst, bezogen auf das Gesamtgewicht der Mischung, wobei die Zusammensetzung mindestens 30 Gew.-% der besagten Mischung enthält, bezogen auf das Gesamtgewicht der Zusammensetzung, wobei:

    (a) das amorphe Polymer ein kohlenwasserstoffhaltiges Polymer ist und eine Glasübergangstemperatur $T_g$ von weniger als etwa -20 °C aufweist; und
    (b) das Kohlenwasserstoffwachs einen Schmelzpunkt von etwa 35 °C bis etwa 130 °C aufweist,

wobei das Kohlenwasserstoffwachs ein mikrokristallines Wachs oder ein Paraffinwachs ist, das im Wesentlichen nur Kohlenstoff und Wasserstoff enthält.

2. Verwendung nach Anspruch 1, wobei das amorphe Polymer teilweise halogeniert ist, vorzugsweise durch Brom, Chlor oder Fluor und/oder wobei das Kohlenwasserstoffwachs andere Elemente als Kohlenstoff und Wasserstoff enthält, wie zum Beispiel Schwefel, Sauerstoff und/oder Stickstoff.

3. Verwendung nach Anspruch 1 oder Anspruch 2, wobei das amorphe Polymer ausgewählt ist aus der Gruppe bestehend aus:

     (1) einem Polymer, umfassend etwa 50,0 % bis etwa 98 % nach Gewicht an Isobuten und etwa 2 % bis etwa 50,0 % eines anderen $C_2$ - $C_{12}$ Alkens als Isobuten, eines $C_4$ - $C_{12}$ Alkadiens, oder einer Mischung davon, bezogen auf das Gesamtgewicht des Polymers;
     (2) einem Polymer, umfassend mehr als etwa 98 % bis etwa 100 % nach Gewicht an Isobuten, bezogen auf das Gesamtgewicht des Polymers;
     (3) einem Polymer, umfassend etwa 50,0 % bis etwa 99,9 % nach Gewicht an Propen und etwa 0,1 % bis etwa 50,0 % eines anderen $C_2$ - $C_{12}$ Alkens als Propen, eines $C_4$ - $C_{12}$ Alkadiens, oder eine Mischung davon, oder etwa 100 Gew.-% Propen, bezogen auf das Gesamtgewicht des Polymers;
     (4) einem Polymer, umfassend etwa 0,1 % bis etwa 50 % nach Gewicht an Ethen und etwa 50,0 % bis etwa 99,9 % eines anderen $C_2$ - $C_{12}$ Alkens als Ethen, eines $C_4$ - $C_{12}$ Alkadiens, oder eine Mischung davon, bezogen auf das Gesamtgewicht des Polymers;
     (5) einem Polymer, umfassend etwa 0,1 % bis etwa 50 % nach Gewicht an 2-Methyl-1-penten und etwa 50,0 % bis etwa 99,9 % eines anderen $C_2$ - $C_{12}$ Alkens als 2-Methyl-1-penten, eines $C_4$ - $C_{12}$ Alkadiens, oder eine Mischung davon, oder etwa 100 Gew.-% 2-Methyl-1-penten, bezogen auf das Gesamtgewicht des Polymers; und
     (6) einer Mischung von (1), (2), (3), (4) und/oder (5).

4. Verwendung nach einem der Ansprüche 1 - 3, wobei das amorphe Polymer ausgewählt ist aus der Gruppe bestehend aus (1) und (2) und einer Mischung davon.

5. Verwendung nach einem der Ansprüche 1 - 4, wobei das amorphe Polymer ein Zahlenmittel des Molekulargewichts $M_n$ im Bereich von 1.000 bis 150.000 g/mol aufweist.

6. Verwendung nach einem der Ansprüche 1 - 5, wobei die Zusammensetzung etwa 80 Gew.-% bis etwa 99,9 Gew.-% der Mischung und etwa 0,1 Gew.-% bis etwa 20 Gew.-% eines Additivs enthält.

7. Verwendung nach einem der Ansprüche 1 - 6, wobei die Zusammensetzung ein Füllmaterial umfasst.

8. Verwendung nach Anspruch 7, wobei die Zusammensetzung etwa 5 bis etwa 70 Gew.-% an Füllmaterial und etwa 30 bis etwa 95 Gew.-% der Mischung, die das amorphe Polymer und das Kohlenwasserstoffwachs enthält, umfasst, bezogen auf das Gesamtgewicht der Zusammensetzung.

9. Verwendung nach Anspruch 7 oder 8, wobei die Zusammensetzung etwa 5 bis etwa 40 Gew.-% an Füllmaterial und etwa 60 bis etwa 95 Gew.-% der Mischung, die das amorphe Polymer und das Kohlenwasserstoffwachs enthält, umfasst, bezogen auf das Gesamtgewicht der Zusammensetzung.

10. Verwendung nach Anspruch 7 oder 8, wobei die Zusammensetzung mehr als etwa 40 bis etwa 60 Gew.-% an Füllmaterial und etwa 40 bis weniger als etwa 60 Gew.-% der Mischung, die das amorphe Polymer und das Kohlenwasserstoffwachs enthält, umfasst, bezogen auf das Gesamtgewicht der Zusammensetzung.

11. Verwendung nach einem der Ansprüche 1 bis 10, wobei die Zusammensetzung ein Additiv umfasst.

12. Verwendung nach Anspruch 6 oder Anspruch 11, wobei das Additiv ausgewählt ist aus der Gruppe bestehend aus Antioxidantien, Färbemitteln, Pigmenten und Mischungen davon.

13. Verwendung nach Anspruch 11 oder Anspruch 12, wobei das Additiv ein Antioxidationsmittel ist.

14. Verwendung nach Anspruch 13, wobei das Antioxidationsmittel in einer Menge von etwa 0,05 bis etwa 5 Gew.-%

vorliegt, bezogen auf das Gesamtgewicht der Zusammensetzung.

15. Verwendung nach Anspruch 13 oder Anspruch 14, wobei das Antioxidans ausgewählt ist aus der Gruppe bestehend aus primären Antioxidantien, sekundären Antioxidantien, multifunktionellen Antioxidantien, Lactonen und Kombinationen von zwei oder mehreren der Antioxidantien.

16. Wickelband, umfassend (a) eine Trägerschicht und (b) eine Schicht umfassend eine Zusammensetzung wie in einem der Ansprüche 1 bis 15 definiert.

17. Wickelband nach Anspruch 17, wobei das Wickelband eine Gesamtdicke von etwa 0,5 bis etwa 20 mm aufweist.

**Revendications**

1. Utilisation d'une composition pour la protection d'un article contre la corrosion, dans laquelle la composition comprend un mélange comprenant environ 70 à environ 95 % en poids d'un polymère amorphe et environ 5 à environ 30 % en poids d'une cire d'hydrocarbure, par rapport au poids total du mélange, la composition contenant au moins 30 % en poids dudit mélange, par rapport au poids total de la composition, dans laquelle :

   (a) le polymère amorphe est un polymère hydrocarboné et a une température de transition vitreuse $T_g$ inférieure à environ -20°C ; et
   (b) la cire d'hydrocarbure a un point de fusion d'environ 35° à environ 130°C, dans laquelle la cire d'hydrocarbure est une cire microcristalline ou une cire paraffine contenant essentiellement uniquement du carbone et de l'hydrogène.

2. Utilisation selon la revendication 1, dans laquelle le polymère amorphe est partiellement halogéné, de préférence par du brome, du chlore ou du fluor et/ou dans laquelle la cire d'hydrocarbure contient des éléments autres que le carbone et l'hydrogène, tels que du soufre, de l'oxygène et/ou de l'azote.

3. Utilisation selon la revendication 1 ou la revendication 2, dans laquelle le polymère amorphe est choisi dans le groupe constitué de :

   (1) un polymère comprenant environ 50,0 % à environ 98 % en poids d'isobutène et environ 2 % à environ 50,0 % d'un alcène en $C_2$ à $C_{12}$ autre que l'isobutène, d'un alcadiène en $C_4$ à $C_{12}$, ou d'un mélange de ceux-ci, par rapport au poids total du polymère,
   (2) un polymère comprenant plus qu'environ 98 % à environ 100 % en poids d'isobutène, par rapport au poids total du polymère,
   (3) un polymère comprenant environ 50,0 % à environ 99,9 % en poids de propène et environ 0,1 % à environ 50,0 % en poids d'un alcène en $C_2$ à $C_{12}$ autre que le propène, d'un alcadiène en $C_4$ à $C_{12}$, ou d'un mélange de ceux-ci, ou environ 100 % en poids de propène, par rapport au poids total du polymère,
   (4) un polymère comprenant environ 0,1 % à environ 50,0 % en poids d'éthène et environ 50,0 % à environ 99,9 % d'un alcène en $C_2$ à $C_{12}$ autre que l'éthène, d'un alcadiène en $C_4$ à $C_{12}$, ou d'un mélange de ceux-ci, par rapport au poids total du polymère,
   (5) un polymère comprenant environ 0,1 % à environ 50,0 % en poids de 2-méthyl-1-pentène et environ 50,0 % à environ 99,9 % d'un alcène en $C_2$ à $C_{12}$ autre que le 2-méthyl-1-pentène, d'un alcadiène en $C_4$ à $C_{12}$, ou d'un mélange de ceux-ci, ou environ 100 % en poids de 2-méthyl-1-pentène, par rapport au poids total du polymère ; et
   (6) un mélange de (1), (2), (3), (4) et/ou (5).

4. Utilisation selon l'une quelconque des revendications 1 à 3, dans laquelle le polymère amorphe est choisi dans le groupe constitué de (1) et (2), et un mélange de ceux-ci.

5. Utilisation selon l'une quelconque des revendications 1 à 4, dans laquelle le polymère amorphe a un poids moléculaire moyen en nombre $M_n$ dans la gamme de 1,000 et 150,000 g/mol.

6. Utilisation selon l'une quelconque des revendications 1 à 5, dans laquelle la composition contient environ 80 % en poids à environ 99,9 % en poids du mélange et environ 0,1 % en poids à environ 20 % en poids d'un additif.

**7.** Utilisation selon l'une quelconque des revendications 1 à 6, dans laquelle la composition comprend un matériau de remplissage.

**8.** Utilisation selon la revendication 7, dans laquelle la composition comprend environ 5 à environ 70 % en poids de matériau de remplissage et environ 30 à environ 95 % en poids du mélange comprenant le polymère amorphe et la cire d'hydrocarbure, par rapport au poids total de la composition.

**9.** Utilisation selon la revendication 7 ou 8, dans laquelle la composition comprend environ 5 à environ 40 % en poids du matériau de remplissage et environ 60 à environ 95 % en poids du mélange comprenant le polymère amorphe et la cire d'hydrocarbure, par rapport au poids total de la composition.

**10.** Utilisation selon la revendication 7 ou 8, dans laquelle la composition comprend plus qu'environ 40 à environ 60 % en poids de matériau de remplissage et environ 40 à moins d'environ 60% en poids du mélange comprenant le polymère amorphe et la cire d'hydrocarbure, par rapport au poids total de la composition.

**11.** Utilisation selon l'une quelconque des revendications 1 à 10, dans laquelle la composition comprend un additif.

**12.** Utilisation selon la revendication 6 ou la revendication 11, dans laquelle l'additif est choisi dans le groupe constitué d'antioxydants, de colorants, de pigments et de leurs mélanges.

**13.** Utilisation selon la revendication 11 ou la revendication 12, dans laquelle l'additif est un antioxydant.

**14.** Utilisation selon la revendication 13, dans laquelle la quantité d'antioxydant présent est d'environ 0,05 à environ 5 % en poids, par rapport au poids total de la composition.

**15.** Utilisation selon la revendication 13 ou la revendication 14, dans laquelle l'antioxydant est choisi dans le groupe constitué d'antioxydants primaires, d'antioxydants secondaires, d'antioxydants multifonctionnels, de lactones, et de combinaisons de deux ou plus desdits antioxydants.

**16.** Ruban d'emballage comprenant (a) une couche de support, et (b) une couche comprenant une composition telle que définie à l'une quelconque des revendications 1 à 15.

**17.** Ruban d'emballage selon la revendication 16, dans lequel le ruban d'emballage a une épaisseur totale d'environ 0,5 à environ 20 mm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5898044 A
- US 7608343 B
- US 20100051199 A
- WO 2008056979 A2
- GB 621923 A
- US 2876204 A
- US 3084128 A
- GB 1044756 A
- JP S59187069 B
- US 5169890 A
- US 6136119 A
- WO 2008046535 A
- CN 102816535
- CN 102367331
- CN 102382474
- US 20050238759 A
- GB 667042 A
- CN 102977717
- CN 102977719
- CN 102898846
- US 20150112017 A
- WO 2013095144 A1
- WO 2003060035 A
- US 6187849 B
- EP 300638 A2

### Non-patent literature cited in the description

- Ullmanns "Encyklopädie der technischen Chemie. 1980, vol. 19, 216-223
- Ullmanns "Encyklopädie der technischen Chemie. 1977, vol. 13, 621
- **S. WU.** *J. Colloid. Interface. Sci.,* 1969, vol. 31, 153
- **D.G. LEGRAND ; G.L. GAINES, JR.** *J. Colloid. Interface Sci.,* 1969, vol. 31, 162
- **KIRK-OTHMER.** Encyclopedia of Chemical Technology. 1993, vol. 8, 905-1093
- Polymer Handbook. 1989
- **J. BOURDARIAT ; R. ISNARD ; J. ODIN.** *J. Polym. Sci., Polym. Phys. Ed.,* 1973, vol. 11, 1817-1828
- **R.W. WARFIELD ; R. BROWN.** *J. Polym. Sci. A,* 1967, vol. 2 5, 791
- **U. GAUR ; B. WUNDERLICH.** *J. Phys. Chem. Ref. Data,* 1981, vol. 10, 1052-1063
- The Polymer Handbook. 1989
- **HAIYANG GAO ; XIAOFANG LIU ; YING TANG ; JIN PAN ; QING WU.** *Polym. Chem.,* 2011, vol. 2 (6), 1398-1403
- **EASTMAN BROCHURE.** *Eastoflex™ - amorphous polyolefins,* 2009
- **EVONIK BROCHURE.** *Flying the flag for customized solutions,* 2013